# EUROPÄISCHE PATENTSCHRIFT

(11) **EP 1 059 781 B1**
(45) Veröffentlichungstag und Bekanntmachung des Hinweises auf die Patenterteilung: **05.09.2007**
(21) Anmeldenummer: 00109634.6
(22) Anmeldetag: 05.05.2000
(51) Int. Cl.: H04L 12/64, H04L 12/66

(54) **Kommunikationseinrichtung mit Mitteln zur Echtzeitverarbeitung von zu übertragenden Nutzdaten**
Communication device with real-time transmission data processing means
Dispositif de communication comportant des moyens de traitement en temps reel des données à transmettre

(30) Priorität: 06.05.1999 DE 19920985
(43) Veröffentlichungstag der Anmeldung: 13.12.2000
(73) Patentinhaber: SIEMENS AKTIENGESELLSCHAFT, 80333 München (DE)
(72) Erfinder: Boll, Gunnar, 85579 Neubiberg (DE); Bürck, Axel, 82024 Taufkirchen (DE); Lucioni, Gonzalo, Dr., 58454 Witten (DE)

(56) Entgegenhaltungen:
- WO-A-97/28628
- SCHNEIDERMAN L: "Application of ATM traffic analysis techniques in the field of digital signal processing" COMMUNICATIONS AND SIGNAL PROCESSING, 1997. COMSIG '97., PROCEEDINGS OF THE 1997 SOUTH AFRICAN SYMPOSIUM ON GRAHAMSTOWN, SOUTH AFRICA 9-10 SEPT. 1997, NEW YORK, NY, USA,IEEE, US, 9. September 1997 (1997-09-09), Seiten 137-140, XP010252349 ISBN: 0-7803-4173-2
- TEXAS INSTRUMENTS: 'TMS320C6000 Technical Brief', [Online] FEBRUARY 1999, Seiten 1 - 92 Gefunden im Internet: <URL:http://focus.ti.com/lit/ug/spru197d/sp ru197d.pdf>

## Beschreibung

Die Erfindung betrifft eine Kommunikationseinrichtung mit Mitteln zur Echtzeitverarbeitung von zu übertragenden Nutzdaten. Als Nutzdaten sind dabei unter anderem Sprachdaten, Videodaten, Facsimiledaten, Dateidaten, Programmdaten, Meßdaten oder Benutzerinformationen zu verstehen.

Aufgrund einer zunehmenden Konvergenz von Sprach- und Datennetzen sowie von mobilen Netzen und Festnetzen steigen gegenwärtig die Anforderungen an die Funktionalität von Kommunikationseinrichtungen in erheblichem Maße. Für zeitgemäße Kommunikationseinrichtungen werden neben hohen Übertragungsraten und Vermittlungsgeschwindigkeiten zunehmend auch Fähigkeiten zur Echtzeitverarbeitung von Nutzdaten gefordert. Beispiele für derartige, bei vielen Kommunikationseinrichtungen bereits implementierte Echtzeitanwendungen zur Echtzeitverarbeitung von Nutzdaten sind Kompression und Dekompression von Sprach-, Video- oder Dateidaten, Verarbeitung von Facsimiledaten, Sprachübertragung per Internetprotokoll (VoIP) oder eine Bereitstellung einer Modemfunktionalität, d.h. eine Umsetzung von digitalen Informationen in Signale des Sprachfrequenzbandes und deren Rücktransformation. Darüber hinaus wird eine Integration weiterer Echtzeitanwendungen, z.B. zur Sprach- oder Datenverschlüsselung oder zur Spracherkennung, angestrebt.

In der Regel ist zur Echtzeitverarbeitung von Nutzdaten, insbesondere bei den mittlerweile sehr hohen Nutzdatenübertragungsraten, eine sehr hohe Verarbeitungsleistung erforderlich. Aus diesem Grund ist bei bisherigen Kommunikationseinrichtungen zumeist für jede Echtzeitanwendung zur Echtzeitverarbeitung von Nutzdaten ein spezielles, für die jeweilige Echtzeitanwendung optimiertes Hardwaremodul, z.B. ein anwendungsspezifischer Halbleiterchip (ASIC) oder eine spezielle Steckkarte, vorgesehen.

Es sei an dieser Stelle angemerkt, daß eine Echtzeitverarbeitung von Signalisierungsdaten in einer Kommunikationseinrichtung demgegenüber meist wesentlich geringere Anforderungen an die Verarbeitungsleistung der Kommunikationseinrichtung stellt, da das Datenvolumen von Signalisierungsdaten in der Regel wesentlich geringer als das Datenvolumen von Nutzdaten ist.

Bei einer Kommunikationseinrichtung, bei der für verschiedene Echtzeitanwendungen jeweils verschiedene, anwendungsspezifische Hardwaremodule vorgesehen sind, sind für jede Erweiterung oder Änderung der Echtzeitfunktionalität der Kommunikationseinrichtung Eingriffe in deren Hardware notwendig. Dadurch wird eine flexible und bedarfsgerechte Anpassung der Echtzeitfunktionalität an sich ändernde Anforderungen stark eingeschränkt. Zur Vereinfachung solcher Hardwareeingriffe sind bei bisherigen Kommunikationseinrichtungen üblicherweise Steckplätze zur Aufnahme von zusätzlichen Hardwaremodulen vorgesehen. Durch die jeweilige Anzahl dieser Steckplätze ist dabei jedoch auch die Anzahl implementierbarer Echtzeitanwendungen begrenzt. Darüber hinaus gehende Erweiterungen sind daher meist ausgeschlossen oder nur mit erheblichem Zusatzaufwand durchführbar.

Aus der Druckschrift WO 97/28628 ist ein hybrides Netzwerk zur Echtzeit-Sprachkommunikation über das Internet bekannt. Hierbei ist ein Server mit einem Prozessor, einem Speicher, einer Netzwerk-Schnittstelle und einem Sprach/Daten/Fax-Controller vorgesehen, die über ein weiteres Bussystem gekoppelt sind. Der Controller führt eine Audioerkennung, Kompression/Dekompression, Verschlüsselung/Entschlüsselung sowie Echo-Unterdrückung mit Hilfe eines digitalen Signalprozessors aus.

Es ist Aufgabe der vorliegenden Erfindung eine Kommunikationseinrichtung anzugeben, die eine flexible Implementierung, Konfigurierung, Änderung und Erweiterung von Echtzeitanwendungen zur Echtzeitverarbeitung von Nutzdaten erlaubt.

Gelöst wird diese Aufgabe durch eine Kommunikationseinrichtung mit den Merkmalen des Patentanspruchs 1.

Ein wesentlicher Vorteil der erfindungsgemäßen Kommunikationseinrichtung besteht darin, daß Echtzeitanwendungen zur Verarbeitung von Nutzdaten - auch in größerer Anzahl - auf einfache Weise implementiert und an wechselnde Betriebserfordernisse angepaßt werden können. Dazu ist lediglich eine Erweiterung oder Änderung der Betriebssoftware für den programmierbaren Mehrkanal-Signalprozessor erforderlich, dessen Verarbeitungskanäle wahlfrei mit Echtzeitanwendungen belegt werden können. Ein aufwendiger und kostenintensiver Austausch von spezialisierten Hardwarekomponenten - wie bei bisherigen Kommunikationseinrichtungen erforderlich - ist nicht notwendig. Eine Erweiterung oder Änderung der Betriebssoftware kann auf besonders einfache Weise dadurch erfolgen, daß die Betriebssoftware von einer Wartungseinrichtung aus über ein Kommunikationsnetz zur Kommunikationseinrichtung übertragen und dort installiert wird. Auf ähnliche Weise ist auch eine Fernkonfigurierung der Echtzeitanwendungen, z.B. deren Zuordnung zu Verarbeitungskanälen des Mehrkanal-Signalprozessors oder eine Änderung von Betriebsparametern, möglich.

Vorteilhaft ist die einfache Implementierbarkeit von Echtzeitanwendungen insbesondere bei größeren Kommunikationseinrichtungen, wie z.B. Vermittlungseinrichtungen oder Netzknoten von Kommunikationsnetzen, da von diesen häufig eine Vielzahl unterschiedlicher Echtzeitanwendungen bereitzustellen ist und diese häufig an modifizierte oder neue Standards anzupassen oder funktionell zu erweitern sind.

Vorteilhafte Ausführungsformen und Weiterbildungen der Erfindung sind in den Unteransprüchen angegeben.

Gemäß einer vorteilhaften Weiterbildung der Erfindung kann ein zusätzlicher programmierbarer Prozessor zur Verarbeitung eines oder mehrerer Kommunikationsprotokolle vorgesehen sein. Dies führt zu einer Entlastung des Mehrkanal-Signalprozessors, der als für Echtzeitanwendungen ausgelegter Signalprozessor häufig nur bedingt für eine effiziente Protokollverarbeitung geeignet ist. Der zusätzliche programmierbare Prozessor kann mit dem Mehrkanal-Signalprozessor über einen Prozessorbus verbunden sein, der eine schnelle Kommunikation zwischen beiden Prozessoren und gegebenenfalls eine gemeinsame Verarbeitung von Anwendungen erlaubt.

Nach einer weiteren vorteilhaften Weiterbildung der Erfindung kann eine Einrichtung zur dynamischen Zuordnung von Echtzeitanwendungen zu Verarbeitungskanälen des Mehrkanal-Signalprozessors vorgesehen sein. Eine solche dynamische Zuordnung kann sich vorzugsweise an temporären Verarbeitungsanforderungen für die Nutzdaten orientieren. So können beispielsweise bei einem Ansteigen der Datenrate von durch eine Echtzeitanwendung zu verarbeitenden Nutzdaten dieser Echtzeitanwendung zusätzliche, parallel verarbeitende Verarbeitungskanäle des Mehrkanal-Signalprozessors zugeordnet werden. Diese zusätzlich zugeordneten Verarbeitungskanäle können entsprechend bei einem Absinken der Datenrate wieder für andere Echtzeitanwendungen freigegeben werden. Auf diese Weise können auch Nutzdaten mit stark wechselnder Datenrate, wie z.B. Dateidaten, effizient in Echtzeit verarbeitet werden.

Gemäß einer weiteren vorteilhaften Weiterbildung der Erfindung kann eine Switching-Einrichtung vorgesehen sein, die den Strom der im Rahmen von Echtzeitanwendungen zu verarbeitenden Nutzdaten auf anwendungsindividuelle Verarbeitungskanäle verteilt und so dem Mehrkanal-Signalprozessor zuführt.

Zu Echtzeitanwendungen, die sich vorteilhaft mittels eines Mehrkanal-Signalprozessors implementieren lassen, gehören insbesondere Echtzeitanwendungen zum Verarbeiten von Signalisierungsdaten, zum Komprimieren und/oder Dekomprimieren von Nutzdaten, insbesondere von Sprach-, Video- und Dateidaten, zum Realisieren einer Modem-Funktionalität, zum Verschlüsseln und/oder Entschlüsseln von Nutzdaten, zur Spracherkennung bei Sprachdaten, zum Verarbeiten von Facsimiledaten, zur Sprachübertragung per Internetprotokoll (VoIP) und zur Signalisierung im Sprachfrequenzband, z.B. zur Rufnummernanzeige im Rahmen des sogenannten CLIP-Leistungsmerkmals (Calling Line Identification and Presentation).

Eine erfindungsgemäße Kommunikationseinrichtung kann vorteilhafterweise auch als Baugruppe zur Integration in eine weitere Kommunikationseinrichtung realisiert sein. Eine solche Baugruppe kann beispielsweise in Form einer Steckkarte zum Einstecken in eine größere Vermittlungseinrichtung oder einen Netzknoten eines Kommunikationsnetzes ausgeführt sein.

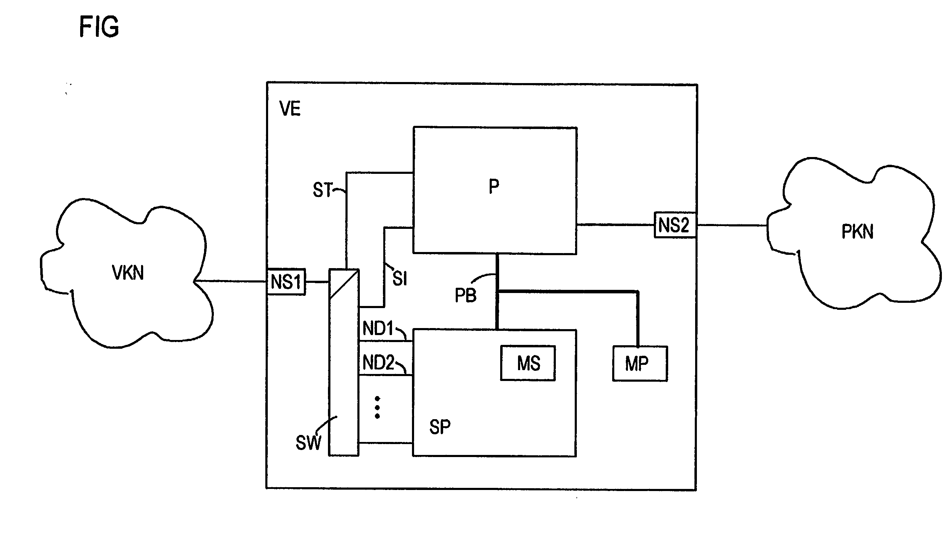

Als Ausführungsbeispiel einer erfindungsgemäßen Kommunikationseinrichtung wird nachfolgend eine erfindungsgemäße Vermittlungseinrichtung anhand der Figur näher erläutert.

Die Figur zeigt eine an zwei Kommunikationsnetze angeschlossene Vermittlungseinrichtung in schematischer Darstellung.

In der Figur ist eine Vermittlungseinrichtung VE schematisch dargestellt, die einerseits an ein verbindungsorientiertes Kommunikationsnetz VKN, wie z.B. ein leitungsvermitteltes oder funkvermitteltes Kommunikationsnetz, und andererseits an ein paketvermittelndes Kommunikationsnetz PKN angeschlossen ist. Die Vermittlungseinrichtung VE enthält als Funktionskomponenten einen Prozessor P mit Speicher MP, einen Mehrkanal-Signalprozessor SP mit integriertem Speicher MS, einen Switching-Baustein SW mit Multiplex/Demultiplex-Funktionalität, eine Netzschnittstelle NS1 zum verbindungsorientierten Kommunikationsnetz VKN sowie eine Netzschnittstelle NS2 zum paketvermittelnden Kommunikationsnetz PKN. Der Prozessor P, der Mehrkanal-Signalprozessor SP und der Speicher MP sind über einen Prozessorbus PB miteinander verbunden. Der Prozessor P ist ferner mit der Netzschnittstelle NS2 und - über einen Steuerbus ST sowie über einen Signalisierungskanal SI - mit dem Switching-Baustein SW gekoppelt. Der Switching-Baustein SW ist seinerseits noch an die Netzschnittstelle NS1 sowie über mehrere Nutzdatenkanäle ND1,ND2, ... an den Mehrkanal-Signalprozessor SP gekoppelt. Jedem der Nutzdatenkanäle ND1,ND2,... ist dabei seitens des Mehrkanal-Signalprozessors SP eine auf diesem ablaufende Echtzeitanwendung zur Echtzeitverarbeitung von über den betreffenden Nutzdatenkanal übermittelten Nutzdaten zugeordnet. Hierbei kann auch mehreren Nutzdatenkanälen dieselbe Echtzeitanwendung zugeordnet sein. Die Programme und Daten zur Ausführung der Echtzeitanwendungen sind im integrierten Speicher MS gespeichert. Die dargestellten Funktionskomponenten der Vermittlungseinrichtung VE können vorteilhafterweise in einer oder mehreren Baugruppen angeordnet sein.

Vom verbindungsorientierten Kommunikationsnetz VKN kommende, im Rahmen von bestehenden und/oder aufzubauenden Verbindungen zu vermittelnde Daten werden an der Netzschnittstelle NS1 empfangen und an den Switching-Baustein SW weitergeleitet. Die im Rahmen einer jeweiligen Verbindung zu übertragenden Daten werden dabei in einem oder mehreren verbindungsindividuellen Übertragungskanälen (nicht einzeln dargestellt), z.B. nach einem Zeitmultiplexverfahren (TDM), übermittelt. Vom Switching-Baustein SW, der z.B. als Multiplexer/Demultiplexer realisiert sein kann, werden die empfangenen Daten in Signalisierungsdaten und Nutzdaten aufgeteilt, wobei die Signalisierungsdaten über den Signalisierungskanal SI zum Prozessor P übermittelt werden. Die Signalisierungsdaten enthalten neben Vermittlungsinformationen auch Verarbeitungsinformationen, die angeben, wie diesen Verarbeitungsinformationen jeweils zugeordnete Nutzdaten zu verarbeiten sind. Anhand einer solchen Verarbeitungsinformation wird den dieser Verarbeitungsinformation jeweils zugeordneten Nutzdaten vom Prozessor P jeweils eine Echtzeitanwendung des Mehrkanal-Signalprozessors SP zur Verarbeitung dieser Nutzdaten zugeordnet. Abhängig von dieser Zuordnung von Nutzdaten zu Echtzeitanwendungen wird der Switching-Baustein SW vom Prozessor P über den Steuerbus ST gesteuert. Die Steuerung erfolgt dabei in einer Wiese, daß die zu verarbeitenden Nutzdaten vom Switching-Baustein SW entsprechend den ihnen jeweils zugeordneten Echtzeitanwendungen auf die anwendungsspezifischen Nutzdatenkanäle ND1,ND2,... verteilt werden und über diese zum Mehrkanal-Signalprozessor SP übertragen werden.

Ein typisches Beispiel einer Zuordnung von Nutzdatenkanälen zu Echtzeitanwendungen ist nachfolgend angegeben:
ND1: Komprimierung von Sprachdaten mit einer Datenrate von 64 kbit/s,
ND2: Dekomprimierung von komprimierten Sprachdaten mit einer Datenrate von 32 kbit/s,
ND3: Verschlüsselung von Daten,
ND4: Verarbeitung von Facsimiledaten,
ND5: Verarbeitung von Videodaten nach der ITU-T Empfehlung H.320,
ND6: Extraktion von in Signale des Sprachfrequenzbandes umgesetzten Daten zur Benutzersignalisierung gemäß dem sogenannten CLIP-Leistungsmerkmal und
ND7: Extraktion von in Signale des Sprachfrequenzbandes umgesetzten digitalen Informationen, z.B. im Rahmen einer Modem-funktionalität.
Die Nutzdatenkanäle ND3, ND4, ND5, ND6 und ND7 sind in der Figur nicht explizit dargestellt.

Die einzelnen Nutzdatenkanälen ND1,ND2,... können durch eine entsprechende Programmierung des Mehrkanal-Signalprozessors SP im Prinzip mit beliebigen Echtzeitanwendungen belegt werden. Zur Programmierung des Mehrkanal-Signalprozessors SP sind die anwendungsspezifischen Programme und Daten im Speicher MS zu speichern. Vorteilhafterweise werden diese anwendungsspezifischen Programme und Daten im Speicher MP, z.B. in einem nichtflüchtigen Massenspeicher, vorgehalten und bei jedem Hochlauf der Vermittlungseinrichtung VE in den Speicher MS übertragen. Eine Änderung der Programmierung des Mehrkanal-Signalprozessors SP kann vorzugsweise durch Übermittlung aktualisierter Programme und Daten über die Kommunikationsnetze VKN oder PKN erfolgen. Die Übertragung der aktualisierten Programme und Daten in den Speicher MS kann dabei z.B. durch ein mitübertragenes Steuersignal veranlaßt werden.

Die über die Nutzdatenkanäle ND1,ND2,... zum Mehrkanal-Signalprozessor SP übertragenen Nutzdaten werden durch die den Nutzdatenkanälen ND1,ND2,... jeweils zugeordneten Echtzeitanwendungen im Mehrkanal-Signalprozessor SP verarbeitet. Die verarbeiteten Nutzdaten werden anschließend gemäß ihrem Übermittlungsziel weitergeleitet. Nutzdaten deren Übermittlungsziel im verbindungsorientierten Kommunikationsnetz VKN liegt, werden dabei über die Nutzdatenkanäle ND1,ND2,... wieder zum Switching-Baustein SW übertragen. Bei bidirektionalen Nutzdatenkanälen kann diese Übertragung über dieselben Nutzdatenkanäle ND1,ND2,... erfolgen wie die Übertragung zum Mehrkanal-Signalprozessor SP. Der Switching-Baustein SW vermittelt daraufhin die verarbeiteten Nutzdaten, ihren jeweiligen Verbindungen zugeordnet, in verbindungsindividuellen Übertragungskanälen über die Netzschnittstelle NS1 in das verbindungsorientierte Kommunikationsnetz VKN, z.B. zu einem Zielendgerät. Verarbeitete Nutzdaten deren Übermittlungsziel im paketvermittelnden Kommunikationsnetz PKN liegt, werden dagegen vom Mehrkanal-Signalprozessor SP zum Prozessor P übermittelt, der diese Nutzdaten in an das Übertragungsziel adressierte Datenpakete umsetzt und über die Netzschnittstelle NS2 in das paketvermittelnde Kommunikationsnetz PKN überträgt. Auf diese Weise können z.B. Sprachdaten per Internetprotokoll (VoIP), Facsimiledaten per Internetprotokoll (FoIP) und/oder Videodaten gemäß der ITU-T Empfehlung H.323 vermittelt werden.

## Patentansprüche

1. Kommunikationseinrichtung mit Mitteln zur Echtzeitverarbeitung von zu übertragenden Nutzdaten im Rahmen unterschiedlicher Echtzeitanwendungen, bei der
die Mittel einen programmierbaren Mehrkanal-Signalprozessor (SP) zur parallelen Echtzeitverarbeitung der im Rahmen der unterschiedlichen Echtzeitanwendungen zu verarbeitenden Nutzdaten aufweisen, wobei die unterschiedlichen Echtzeitanwendungen verschiedenen, anwendungsindividuell programmierten Verarbeitungskanälen (ND1, ND2,...) des Mehrkanal-Signalprozessors (SP) zur programmgesteuerten Verarbeitung von Nutzdaten zugeordnet sind, und wobei die Kommunikationseinrichtung eine Einrichtung zur dynamischen, von temporären Verarbeitungsanforderungen für die Nutzdaten abhängigen Zuordnung von Echtzeitanwendungen zu Verarbeitungskanälen (ND1, ND2, ...) des Mehrkanal-Signalprozessors (SP) aufweist.

2. Kommunikationseinrichtung nach Anspruch 1,
**gekennzeichnet durch**
einen zusätzlichen programmierbaren Prozessor (P) zur Verarbeitung eines Kommunikationsprotokolls.

3. Kommunikationseinrichtung nach Anspruch 2,
**gekennzeichnet durch**
einen den Mehrkanal-Signalprozessor (SP) und den zusätzlichen programmierbaren Prozessor (P) verbindenden Prozessorbus (PB).

4. Kommunikationseinrichtung nach einem der vorhergehenden Ansprüche,
**gekennzeichnet durch**
eine Switching-Einrichtung (SW) zum Verteilen der zu verarbeitenden Nutzdaten auf anwendungsindividuelle Verarbeitungskanäle (ND1, ND2, ...) des Mehrkanal-Signalprozessors (SP).

5. Kommunikationseinrichtung nach einem der vorhergehenden Ansprüche,
**gekennzeichnet durch**
eine mindestens einem Verarbeitungskanal des Mehrkanal-Signalprozessors (SP) zugeordnete Echtzeitanwendung zum Verarbeiten von Signalisierungsdaten.

6. Kommunikationseinrichtung nach einem der vorhergehenden Ansprüche,
**gekennzeichnet durch**
eine mindestens einem Verarbeitungskanal des Mehrkanal-Signalprozessors (SP) zugeordnete Echtzeitanwendung zum Komprimierung und/oder Dekomprimieren von Nutzdaten.

7. Kommunikationseinrichtung nach einem der vorhergehenden Ansprüche,
**gekennzeichnet durch**
eine mindestens einem Verarbeitungskanal des Mehrkanal-Signalprozessors (SP) zugeordnete Echtzeitanwendung zum Realisieren einer Modem-Funktionalität.

8. Kommunikationseinrichtung nach einem der vorhergehenden Ansprüche,
**gekennzeichnet durch**
eine mindestens einem Verarbeitungskanal des Mehrkanal-Signalprozessors (SP) zugeordnete Echtzeitanwendung zum Verschlüsseln und/oder Entschlüsseln von Nutzdaten.

9. Kommunikationseinrichtung nach einem der vorhergehenden Ansprüche,
**gekennzeichnet durch**
eine mindestens einem Verarbeitungskanal des Mehrkanal-Signalprozessors (SP) zugeordnete Echtzeitanwendung zur Spracherkennung bei Sprachdaten.

10. Kommunikationseinrichtung nach einem der vorhergehenden Ansprüche,
**gekennzeichnet durch**
eine mindestens einem Verarbeitungskanal des Mehrkanal-Signalprozessors (SP) zugeordnete Echtzeitanwendung zum Verarbeiten von Facsimiledaten.

11. Kommunikationseinrichtung nach einem der vorhergehenden Ansprüche,
**gekennzeichnet durch**
eine mindestens einem Verarbeitungskanal des Mehrkanal-Signalprozessors (SP) zugeordnete Echtzeitanwendung zur Sprachübertragung per Internetprotokoll.

12. Kommunikationseinrichtung nach einem der vorhergehenden Ansprüche,
**dadurch gekennzeichnet,**
**daß** die Kommunikationseinrichtung als Baugruppe zur Integration in eine weitere Kommunikationseinrichtung realisiert ist.

## Claims

1. Communications facility with means for real-time processing of payload data to be transmitted in the context of different real-time applications, wherein
the means have a programmable multi-channel signal processor (SP) for parallel real-time processing of the payload data to be processed in the context of the different real-time applications, with the different real-time applications being assigned to different processing channels (ND1, ND2, ...) of the multi-channel signal processor (SP) programmed in an application-specific manner for programme-controlled processing of payload data and with the communications facility having a facility for the dynamic assignment of real-time applications to processing channels (ND1, ND2, ...) of the multi-channel signal processor (SP) as a function of temporary processing requirements for the payload data.

2. Communications facility according to claim 1,
**characterised by**
an additional programmable processor (P) for processing a communications protocol.

3. Communications facility according to claim 2,
**characterised by**
a processor bus (PB) connecting the multi-channel signal processor (SP) and the additional programmable processor (P).

4. Communications facility according to one of the preceding claims,
**characterised by**
a switching facility (SW) for distributing the payload data to be processed to application-specific processing channels (ND1, ND2, ...) of the multi-channel signal processor (SP).

5. Communications facility according to one of the preceding claims,
**characterised by**
a real-time application for processing signalling data, assigned to at least one processing channel of the multi-channel signal processor (SP).

6. Communications facility according to one of the preceding claims,
**characterised by**
a real-time application for compressing and/or decompressing payload data, assigned to at least one processing channel of the multi-channel signal processor (SP).

7. Communications facility according to one of the preceding claims,
**characterised by**
a real-time application for realising a modem functionality, assigned to at least one processing channel of the multi-channel signal processor (SP).

8. Communications facility according to one of the preceding claims,
**characterised by**
a real-time application for encrypting and/or decrypting payload data, assigned to at least one processing channel of the multi-channel signal processor (SP).

9. Communications facility according to one of the preceding claims,
**characterised by**
a real-time application for voice recognition in the case of voice data, assigned to at least one processing channel of the multi-channel signal processor (SP).

10. Communications facility according to one of the preceding claims,
**characterised by**
a real-time application for processing facsimile data, assigned to at least one processing channel of the multi-channel signal processor (SP).

11. Communications facility according to one of the preceding claims,
**characterised by**
a real-time application for voice transmission over internet protocol, assigned to at least one processing channel of the multi-channel signal processor (SP).

12. Communications facility according to one of the preceding claims,
**characterised in that**
the communications facility is realised as an assembly for integration into a further communications facility.

## Revendications

1. Dispositif de communication comprenant des moyens pour le traitement en temps réel de données utiles à transmettre dans le cadre de différentes applications en temps réel, dans lequel les moyens présentent un processeur de signaux multicanaux (SP) programmable pour le traitement parallèle en temps réel des données utiles à traiter dans le cadre des différentes applications en temps réel, les différentes applications en temps réel étant attribuées à différents canaux de traitement (ND1, ND2, ...), programmés de façon individuelle par application, du processeur de signaux multicanaux (SP) pour le traitement commandé par programme de données utiles, et le dispositif de communication présentant un dispositif pour l'attribution dynamique, dépendante d'exigences de traitement temporaires pour les données utiles, d'applications en temps réel à des canaux de traitement (ND1, ND2, ...) du processeur de signaux multicanaux (SP).

2. Dispositif de communication selon la revendication 1,
**caractérisé par**
un processeur (P) programmable supplémentaire pour le traitement d'un protocole de communication.

3. Dispositif de communication selon la revendication 2,
**caractérisé par**
un bus de processeur (PB) reliant le processeur de signaux multicanaux (SP) et le processeur (P) programmable supplémentaire.

4. Dispositif de communication selon l'une quelconque des revendications précédentes,
**caractérisé par**
un dispositif de commutation (SW) pour la répartition des données utiles à traiter entre des canaux de traitement (ND1, ND2, ...), individuels par application, du processeur de signaux multicanaux (SP).

5. Dispositif de communication selon l'une quelconque des revendications précédentes,
**caractérisé par**
une application en temps réel, attribuée au moins à un canal de traitement du processeur de signaux multicanaux (SP), pour le traitement de données de signalisation.

6. Dispositif de communication selon l'une quelconque des revendications précédentes,
**caractérisé par**
une application en temps réel, attribuée au moins à un canal de traitement du processeur de signaux multicanaux (SP), pour la compression et/ou la décompression de données utiles.

7. Dispositif de communication selon l'une quelconque des revendications précédentes,
**caractérisé par**
une application en temps réel, attribuée au moins à un canal de traitement du processeur de signaux multicanaux (SP), pour la réalisation d'une fonctionnalité de modem.

8. Dispositif de communication selon l'une quelconque des revendications précédentes,
**caractérisé par**
une application en temps réel, attribuée au moins à un canal de traitement du processeur de canaux multicanaux (SP), pour le codage et/ou le décodage de données utiles.

9. Dispositif de communication selon l'une quelconque des revendications précédentes,
**caractérisé par**
une application en temps réel, attribuée au moins à un canal de traitement de processeur de signaux multicanaux (SP), pour la reconnaissance vocale dans le cas de données vocales.

10. Dispositif de communication selon l'une quelconque des revendications précédentes,
**caractérisé par**
une application en temps réel, attribuée au moins à un canal de traitement du processeur de signaux multicanaux (SP), pour le traitement des données de fac-similé.

11. Dispositif de communication selon l'une quelconque des revendications précédentes,
**caractérisé par**
une application en temps réel, attribuée au moins à un canal de traitement du processeur de signaux multicanaux (SP), pour la transmission vocale par protocole Internet.

12. Dispositif de communication selon l'une quelconque des revendications précédentes,
**caractérisé en ce que**
le dispositif de communication est réalisé sous la forme d'ensemble pour l'intégration dans un autre dispositif de communication.
